# EUROPEAN PATENT SPECIFICATION

(11) **EP 2 468 211 B1**
(45) Date of publication and mention of the grant of the patent: **10.01.2018**
(21) Application number: 11189611.4
(22) Date of filing: 17.11.2011
(51) Int. Cl.: A61C 8/00

(54) **Improved prosthetic attachment**
Verbesserte Prothesenbefestigung
Fixation de prothèse améliorée

(30) Priority: 27.12.2010 ES 201031945
(43) Date of publication of application: 27.06.2012
(73) Proprietor: Terrats Mecanizados, S.L., 08210 Barberà Del Vallès (ES)
(72) Inventor: Terrats Triquell, Ramón, 08110 Montcada I Reixac (ES)
(74) Representative: Sugrañes Patentes y Marcas

(56) References cited:
- WO-A1-2011/034780
- WO-A2-2011/056450
- US-A1- 2009 123 888
- US-A1- 2009 291 412

## Description

### SUBJECT MATTER OF THE INVENTION

The subject matter of the present invention is a prosthetic attachment having at least one shotpeened area with a rugosity comprised within a predetermined rugosity range to maximize the degree of adherence of the attachment to the prosthetic aesthetic elements to be cemented on the same.

### BACKGROUND TO THE INVENTION

To substitute the teeth pieces in the mouth of a patient the use of teeth implants is known, said implants consisting basically in a metallic part osseointegrated in the jawbone of the patient, to constitute the root for the lost tooth, to which an aesthetic prosthetic element is secured to substitute the exposed part of the previously lost tooth. The aesthetic prosthetic element may consist of, for instance, cast metal, resins, zirconium or ceramic crowns.

Usually, the aesthetic prosthetic element has to be supported on an additional intermediate part, as for example straight or angular pillars, rotating or anti-rotating pillars, pins, connections, implant-crown connections, etc. In the present description, these intermediate parts between the tooth implant and the aesthetic prosthetic element will be called "prosthetic attachments", with the aim to be clearly differentiated from the implants themselves. The attachments may be used as unitary parts, for individual tooth pieces, or as multiple attachments when the aim is to support more complex structures.

Usually, the prosthetic attachments are screwed to the implants, the aesthetic prosthetic elements being secured in its turn to the attachments by means of an adhesive (this being known as "cementing" in this technical field).

To prevent the rotation of the aesthetic prosthetic elements in relation to the attachments, in the previous mechanization step of the attachment, some facet, polygonal profile or any other geometrical form having the tendency to prevent rotation is carried out. On the other side, it is also necessary to ensure the quality of the securement in the lengthwise direction. For example, if the size of the attachment permits, some reinforcing elements for the longitudinal securement will be carried out, for instance, one or more retention circular slots. However, it is known that the degree of longitudinal securement depends basically on the adherence of the parts and the efficiency of the adhesive product used therefor. Taking into account that said degree of securement substantially improves on a shotpeened surface, the manufacturers of adhesive products recommend said treatment before the cementing of the aesthetic prosthetic elements on the attachment.

Shotpeening, also called sandblasting, consists in projecting abrasive particles of small size, to a high pressure, upon a given surface, so that the hammering of said particles provokes the deformation of the surface, increasing its rugosity. The shotpeening process is also frequently applied to external surfaces of the implants to improve the securement to the jawbone structure. Sometimes, also heat treatments or chemical processes are carried out later on to enhance the osseointegration process of the implants. The documents P200402682, P200600738, WO201257SE are examples of the application of shotpeening to dental implants.

However, the shotpeening treatments applied to prosthetic attachments are carried out usually in an artisanal form by the prosthetic operators themselves, without determining the desirable rugosity, the result depending on the ability of the operator. For example, the document WO2011056450 discloses the roughness increase like a factor to improve the bond strength between the abutment and material at the abutment interface. Particularly, this document discloses a surface roughness (Ra) of about 2 - 3, suggesting that when the roughness is raised, the adherence is raised too. In the similar form, is disclosed in document WO2011034780, because is stated that the surface roughness in sandblasted metal may have about 2 - 3 (Ra). Consequently, there is the risk of negatively affecting the quality of the union between the attachment and the aesthetic prosthetic element in case that the connection between both parts is excessively deformed, or the efficiency of the adhesive product or the connection with the implant are not sufficient.

### DESCRIPTION OF THE INVENTION

The invention is as defined in claim 1.

The inventors of the present invention have discovered that if the shotpeened surface of the dental attachment has a rugosity under a certain threshold the adherence between said surface and the aesthetic prosthetic element decreases, while if the rugosity exceeds a second threshold, there is the risk of producing the dimensional and geometric destruction of the attachment, worsening as well the quality of the union between both parts. More specifically, the tests carried out by the inventors have shown that the union between one prosthetic attachment and the corresponding aesthetic prosthetic element improves substantially when the prosthetic attachment has at least a shotpeened area with a rugosity comprised between Ra=0,8 µm and Ra=2,5 µm. More preferably, it has been discovered that the results are optimal for rugosities comprised between Ra=1,4 µm and Ra=1,9 µm.

As there is more than one way to measure the rugosity of a surface, in this description the average rugosity value in µm (Ra) has been used, Ra is the arithmetic average of the absolute values of the distances from the rugosity of the profile in respect to the medium lengthwise line in the measurement. As the method is well known and admitted overall in the technical field, the inventors understand that all clarity requirement are fulfilled in this connection in the present patent application.

So far, it was a job of the dental prosthetic practitioners to carry out the additional shotpeening treatment to the commercially available attachments which are supplied with smooth surfaces. However, it is not possible to obtain the range of rugosities described in the present patent application with the scarce tools available to a dental prosthetic practitioner. For this reason, the shotpeening treatment to be applied to the prosthetic attachments of the invention has to be carried out in the manufacturing plant, controlling all parameters affecting the final quality of the shotpeened area as pressure, abrasive elements, distance and angular arrangement of the shotpeening nozzle in respect to the longitudinal axis of the attachment, time, velocity and the number of revolutions necessary. Only in this way the quality and the degree of rugosity, which are described, may be obtained without compromising the geometrical shape and size of the attachment.

According to another preferred embodiment of the invention, the prosthetic attachments according to the invention may be made out of titanium or any other material commonly used in this field, as for example alloys based in cobalt, chrome, nickel and other metals.

### BRIEF DESCRIPTION OF THE DRAWINGS

Figures 1 to 6 show examples of different types of prosthetic attachments with shotpeened areas according to the present invention.
Figure 7 shows the profile of the rugosity of a shotpeened surface of a prosthetic attachment according to the invention.

### PREFERRED EMBODIMENT OF THE INVENTION

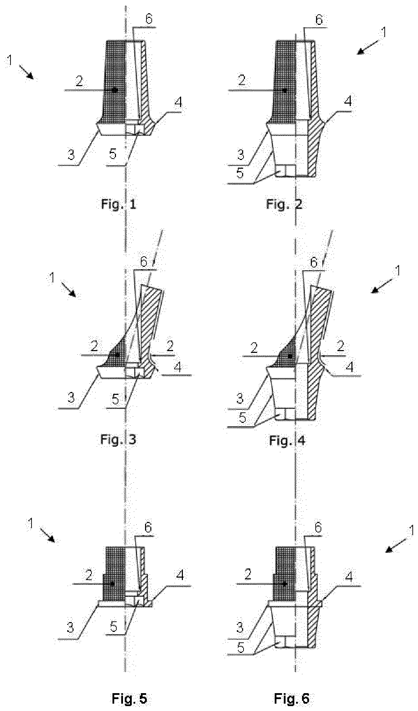

The invention will be described in the following, referring to the enclosed figures 1 to 6 which show some examples of the prosthetic attachments (1) having shotpeened areas (2) according to the invention, in which the following reference numerals have been used:
1. Prosthetic attachment
2. Shotpeened area
3. Polished area with possible gingival contact
4. Transition perimeter between a polished area of the attachment and the shotpeened area
5. Zone for the connection to the implant
6. Zone for the housing of the head of the screw fixing the attachment to the implant.

In all of these figures it may be appreciated that the shotpeened area (2) covers only a part of the attachment (1), being perfectly separated from the rest of the same. Particularly, the shotpeened area (2) is separated from the zone for the connection to the implant (5), from the housing for the screw (6) and from the perimeter of eventual gingival contact (3), in all of which zones the highest possible polishing is desirable, both for the proper precision of adjustment in the connection as well as for lowering the possibility of propagation of infections. These advantages may be obtained due to the fact that the shotpeening process is carried out in the manufacturing facilities, instead of the installations of the dental prosthetic practitioner.

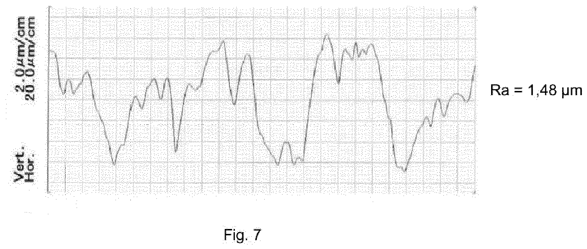

On the other side, figure 7 shows an example of the profile of a shotpeened area (2) according to the present invention in which the rugosity has a value of Ra=1,48 µm.

## Claims

1. Improved prosthetic attachment (1) for its securement by cementing to an aesthetic prosthetic element in which the prosthetic attachment (1) has at least a shotpeened area (2), **characterised in that** the rugosity of said shotpeened area (2) is comprised between Ra=0,8 µm and Ra= 1,9 µm.

2. Improved prosthetic attachment (1), according to claim 1, in which the rugosity of the shotpeened area (2) is comprised between Ra=1,4 µm and Ra= 1,9 µm.

3. Improved prosthetic attachment (1), according to any of the previous claims, made out of titanium or alloys of cobalt chrome or nickel.

## Patentansprüche

1. Verbesserte Prothesenbefestigung (1) für deren Fixierung durch Zementierung an einem ästhetischen Prothesenelement in welches die Prothesenbefestigung (1) mindestens einen gestrahlten Bereich (2) aufweist, **dadurch gekennzeichnet, dass** die Rauigkeit des genannten gestrahlten Bereichs (2) zwischen Ra = 0,8 µm und Ra = 1,9 µm liegt.

2. Verbesserte Prothesenbefestigung (1), nach Anspruch 1, in welcher die Rauigkeit des gestrahlten Bereichs (2) zwischen Ra = 1,4 µm und Ra = 1,9 µm liegt.

3. Verbesserte Prothesenbefestigung (1), nach einem der vorhergehenden Ansprüche, bestehend aus Titan oder Legierungen von Kobalt, Chrom oder Nickel.

## Revendications

1. Fixation de prothèse améliorée (1) pour son attachement par cémentation à un élément de prothèse esthétique dans laquelle la fixation de prothèse (1) a au moins une zone grenaillée (2), **caractérisée en ce que** la rugosité de ladite zone grenaillée (2) est comprise entre Ra = 0,8 µm et Ra = 1,9 µm.

2. Fixation de prothèse améliorée (1) selon la revendication 1, dans laquelle la rugosité de la zone grenaillée (2) est comprise entre Ra = 1,4 µm et Ra = 1,9 µm.

3. Fixation de prothèse améliorée (1) selon l'une quelconque des revendications précédentes, fabriquée à partir de titane ou d'alliages de chrome-cobalt ou nickel.
